(19) Europäisches Patentamt

European Patent Office

Office européen des brevets

(11) **EP 0 895 388 B1**

(12) **EUROPEAN PATENT SPECIFICATION**

(45) Date of publication and mention
of the grant of the patent:
**22.09.2004 Bulletin 2004/39**

(51) Int Cl.⁷: **H04L 27/00**, H04H 1/00,
H04L 27/26

(21) Application number: **98113172.5**

(22) Date of filing: **15.07.1998**

(54) **Symbol synchronisation and mode detection for multicarrier signals**

Symboltaktsynchronisierung und Moduserfassung für Mehrträgersignale

Synchronisation de symbôles et détéction de mode pour signaux multiporteurs

(84) Designated Contracting States:
**DE FR GB IT**

(30) Priority: **28.07.1997 EP 97112929**

(43) Date of publication of application:
**03.02.1999 Bulletin 1999/05**

(73) Proprietor: **DEUTSCHE THOMSON-BRANDT GMBH**
**78048 Villingen-Schwenningen (DE)**

(72) Inventors:
 • **Klank, Otto**
 **31275 Lehrte (DE)**
 • **Laabs, Jürgen**
 **30982 Pattensen (DE)**
 • **Klausberger, Wolfgang**
 **30880 Laatzen (DE)**

(74) Representative: **Hartnack, Wolfgang, Dipl.-Ing.**
**Deutsche Thomson-Brandt GmbH**
**European Patent Operations**
**Karl-Wiechert-Allee 74**
**30625 Hannover (DE)**

(56) References cited:
**EP-A- 0 653 858**          **EP-A- 0 786 889**
**WO-A-97/07620**          **DE-C- 4 403 408**
**FR-A- 2 743 967**          **GB-A- 2 307 155**

• **OKADA M ET AL: "Optimum synchronization of orthogonal multi-carrier modulated signals" PERSONAL, INDOOR AND MOBILE RADIO COMMUNICATIONS, 1996. PIMRC'96., SEVENTH IEEE INTERNATIONAL SYMPOSIUM ON TAIPEI, TAIWAN 15-18 OCT. 1996, NEW YORK, NY, USA,IEEE, US, 15 October 1996 (1996-10-15), pages 863-867, XP010209086 ISBN: 0-7803-3692-5**
• **"Digital Video Broadcasting (DVB)" XP002195640 European Telecommunication Standard ETS 300 744 March 1997 * page 25 - page 34 ***
• **SPETH M ET AL: "Frame synchronization of OFDM systems in frequency selective fading channels" VEHICULAR TECHNOLOGY CONFERENCE, 1997, IEEE 47TH PHOENIX, AZ, USA 4-7 MAY 1997, NEW YORK, NY, USA,IEEE, US, 4 May 1997 (1997-05-04), pages 1807-1811, XP010229079 ISBN: 0-7803-3659-3**

**Description**

The invention relates to a method and a receiver for receiving multicarrier digital signals.

Prior art

Modulation types such as OFDM, QPSK and QAM can be used for terrestrial transmission of digital television and broadcast radio signals (referred to in general as broadcast radio signals in the following text). Examples of such broadcast radio signals include DVB (digital video broadcast), HDTV-T (hierarchical digital television transmission) and DAB (digital audio broadcast). The fundamental principles of the DVB system are specified in ETS 300 744. The data in digital broadcast radio signals are arranged in two-dimensional (time and frequency, called "temporal-spectral" in the following text) frames which have a time duration of $T_F$ and, in the case of ETS 300 744, comprise 68 OFDM symbols. Four frames form a superframe. Various transmission modes may be used in the transmission systems for digital audio or video signals mentioned above. In the case of ETS 300 744, symbols of duration $T_S$ are in each case formed from 1705 carriers (2K mode) or from in each case 6817 carriers (8K mode) at different frequencies. The 2K mode is particularly suitable for individual transmitters and small SFN networks (single frequency networks) with limited distances between transmitters. The 8K mode can be used for individual transmitters and for small and large SFN networks. The symbols have a time duration of $T_S$ with a wanted part of duration $T_u$ and a guard interval of duration $\Delta$. The guard interval is formed by cyclic continuation of the wanted part, and is arranged before the latter, in time. All symbols contain data and reference information. Each symbol may be regarded as a group of cells, one cell corresponding to each carrier.

Apart from the actual video, audio or other data, the frames contain scattered pilot cells (scattered pilots) continuous pilot signals and TPS carriers or pilots (transmission parameter signalling). These are described, for example, in Sections 4.4 to 4.6 of ETS 300 744, March 1997. The pilot cells or carriers contain reference information whose transmitted value is known by the receiver. The continuous pilot signals may coincide with a scattered pilot cell, for example in every fourth symbol. The value or contents of the scattered and continuous pilot signals are derived, for example, from a pseudo-random binary sequence $W_k$ for each of the transmitted carriers k. The sequence $W_k$ may also define the start phase of the TPS carrier information. The pilot cells or carriers may be used at the receiver end for frame synchronisation, frequency synchronisation, time synchronisation, channel estimation and transmission mode identification. The receiver manufacturer is free to chose whether and how these options are used at the receiver end. EP-A-0 786 889 describes a corresponding system for use with DAB.

OKADA M. ET AL.: "Optimum Synchronization of Orthogonal Multi-Carrier Modulated Signals", PERSONAL, INDOOR AND MOBILE RADIO COMMUNICATIONS, 1996, PIMRC'96, SEVENTH IEEE INTERNATIONAL SYMPOSIUM ON TAIPEI, TAIWAN 15-18 OCT. 1996, NEW YORK, NY, USA, IEEE, US, 15 October 1996, pages 863-867, XPO1 0209086, ISBN: 0-7803-3692-5, shows a receiver for a digital multi-carrier OFDM signal that is arranged in temporal-spectoral frames and contains data symbols with a given guard interval and a given symbol length. This receiver includes a coarse time correction, a symbol length estimation and an AFC correction, using a maximum likelihood estimator which operates on the received and corrected input signal and evaluates an equation that allows to determine whether a system-conform signal is received. The operations of this receiver are based on an estimated symbol length and guard interval length.

GB-A-2 307 155 discloses coarse AFC correction of a received OFDM signal using FFT-output pilot signals contained in the received OFDM signal.

SPETH M. ET AL: "Frame synchronization of OFDM systems in frequency selective fading channels", VEHICULAR TECHNOLOGY CONFERENCE, 1997, IEEE 47TH PHOENIX, AZ, USA 4-7 MAY 1997, NEW YORK, NY, USA, IEEE, US, 4 May 1997, pages 1807-1811, XP010229079, ISBN: 0-7803-3659-3, deals with frame synchronisation for received OFDM signals and discloses interpolation of pilot signals in time and frequency direction for the purpose estimating the frame start position.

Invention

An important consideration in the context of such systems is to find a system-conformal signal in the situation where a receiver is switched on or is tuned into another channel. To do this, the receiver has to be able to distinguish between different services, for example to distinguish digital signals from analogue signals or digital DVB signals from digital DAB signals. Both digital signals and analogue signals (for example PAL television signals) may occur in certain frequency bands, in which case the centre frequencies may differ from the specified channel mid-frequencies.

The invention is based on the object of improving the reliability in evaluating whether a received multicarrier digital signal is system-conform or present, or not. This object is achieved by the methods specified in claims 1 and 4. The invention is based on the further object of specifying a receiver for using the method according to the invention. This object is achieved by the receivers specified in claims 11 and 12.

At the receiver end, coarse time synchronisation linked to mode detection and, possibly and additionally, coarse AFC (automatic frequency correction) are carried out initially both for searching for and identifying received signals, as well as for continuously monitoring them.

In coarse time synchronisation, the time signal is correlated with the time signal shifted by a wanted symbol length $T_u$. This correlation may be carried out more than once, for example five times per data frame. In this correlation, signal samples of different length $T_u$ are used, depending on the respective mode, and the correlation result maxima obtained from this are then used to deduce the present mode (for example 2K or 8K modes). If no usable correlation result maximum is obtained, the correlation steps may be repeated.

The guard interval used is determined, and a sampling window is then positioned, based on the interval between the maxima and/or their amplitudes, taking account of the mode. This can be done by once-off setting of a counter which is synchronised to the symbol sequence ($T_u+\Delta$) and outputs a time window of duration $T_u$. In the following text, this time window is also called the sampling window or FFT window. A basic oscillator used in this case, and thus the position of the window as well, are corrected in subsequent steps via fine time synchronisation.

Once the mode has been identified correctly and the sampling window has been positioned approximately correctly, an FFT can be carried out, with a length corresponding to the mode.

Instead of an FFT, the invention, in an entirely general form, allows the use of a Fourier transformation or any other transformation which allows frequency-spectral representation of the time domain in the frequency domain. Once the signal has been converted in this way, pilot cells are taken from it in accordance with the intended arrangement layout, and are correlated with the values provided in accordance with the specification. According to the specification, 45 spectrum positions in the case of the 2K mode and 177 spectrum positions in the case of the 8K mode, for example, are occupied by continuous pilot signals. For example, $\pm16$ such sets (over $\pm16$ carrier intervals) are used for correlation in the 2K mode, and $\pm64$ such sets (over $\pm64$ carrier intervals) in the 8K mode. The correlation steps carried out provide a correlation maximum and, possibly, a number of secondary maxima of lower amplitude in the immediate vicinity. The frequency offset of the baseband signal can be determined from the position of the maximum. This result is used for coarse correction of the frequency, for example by means of a multiplier M arranged upstream of the FFT section, so that the frequency error for further steps is less than $\pm1/2$ carrier interval. However, it is a precondition that the position of the maximum was known in advance with sufficient reliability and an accuracy of better than $\pm1/2$ carrier interval. The following calculation can be carried out in order to estimate the position $I_{real,s}$ of the maximum more accurately:

$$I_{real,s} = I_{max,s} + W_{Imax,s,1}/(W_{Imax,s,}+W_{Imax,s,1}) * sgn (I_{max,s,1} - I_{max,s}),$$

where "sgn" is the mathematical sign of the position difference, the greatest maximum has the value $W_{Imax,}s$ and is located at the position $I_{max,s}$, and the next smaller maximum value (of the same polarity) is designated $W_{Imax,s,1}$ and is located at the position $I_{max,s} + 1$ or $I_{max,s} -1$, designated $I_{max,s,1}$.

These calculations can be simplified by using the two values - the maximum and the next smaller maximum - in the sequence of the I values. The possible positions are then designated $I_{1,s}$ (the first position) and $I_{2,s}$, in which case the maximum may occur either at $I_{1,s}$ or at $I_{2,s}$. The mathematical sign function then disappears:

$$I_{real,s} = I_{1,s} + W_{12,s}/(W_{11,s} + W_{12,s}) .$$

A plurality of such results (obtained successively in time), preferably three, may be combined, filtered or processed together in order to improve the AFC. The next frequency evaluation may be carried out at a greater interval, for example a total of 3 to 6 evaluations may be carried out per frame for the purpose of synchronisation monitoring, in order to keep the computation complexity within reasonable orders of magnitude.

The intermediate value or more accurate value of the error determined in this way has already been taken into account in the frequency correction described above. Coarse frequency setting with a better accuracy than $\pm1/2$ carrier interval ($-F_s /2 < \Delta f < F_s /2$ ) is the precondition for the following acceptance of the AFC function by the so-called fine control system.

The achieved accuracy once the coarse setting has been carried out can be determined by checking the frequency once again. In this case, the result should be $-F_s /3 < \Delta f < F_s /3$ .

If this is not achieved, or if the subsequent fine correction leads to a situation in which further signal processing (decoding) is impossible, then the processes described above must be repeated using a position offset by one carrier interval (in the direction of the side with the next lower cor-. relation result, or possibly a correlation result of equal magnitude).

Specific evaluations are carried out after the coarse time synchronisation and/or the coarse AFC. Both the values from the time correlation and those from the correlation over frequency are (in each case) used to form a ratio from the determined value of the maximum (or centre value for the time correlation) and the average value of the other correlation partial results which are not associated with the maximum or the centre region.

The results of the time correlation can be used, for example, to extract a region of duration $T_u$, although the maximum need not necessarily be in the centre of this region. A region with a duration of $\pm 1/2$ guard interval duration must be separated out for calculating the average value. The centre of the central region may be determined, for example, by determining the -6dB points and calculating a mid-position. This advantageously reduces the influence of noise and multipath effects.

The entire range of $\pm 16$ individual steps (for the 2K mode) or $\pm 64$ individual steps (for the 8K mode) is used, for example, for evaluating the correlation partial results determined over the frequency. Once again, the main maximum may be located away from the centre, and secondary maxima may be present at a greater distance. Secondary lines may likewise exist in the region $\pm F_s$ around the main maximum, but these should be regarded as part of the main maximum and occur as a result of an error in the signal position from the grid $F_s$ in the order $-F_s/2 \le \Delta f \le F_s/2$. For evaluation, it is thus recommended that the maximum value of the main maximum and the adjacent next smaller value be combined. The average value $C_{av}$ is calculated, for example, as the mean square of all the correlation partial results which are not associated with the main maximum or the central region:

$$C_{av} = \sqrt{\left( \left( \sum_{0}^{l_1} |W_1|^2 + \sum_{l_2}^{l_{max}} |W_1|^2 \right) / (l_1 + l_{max} - l_2 + 2) \right)} \quad ,$$

where the region $l_1+1$ to $l_2-1$ relates to the part removed. Im the case of complex partial results ($W_l$), the sum of the squares of the real and imaginary parts may also be formed, instead of forming the magnitude. For practical reasons, further simplifications are possible, for example, by rearranging the formula and with correspondingly changed minimum values, multiplications may be carried out instead of the division and calculation of the square root, that is to say squaring of the maximum values and multiplication by the divisor used in the formula. In good signal conditions and where the requirements for the quality of the statement are less stringent, it may be sufficient to calculate only the simple mean value. It is furthermore possible to compare the correlation partial results individually with a limit value derived from the maximum value (or from the sum of the maximum value and the adjacent next smaller value) and to use this to derive statements relating to the correlation result overall. This is possible when, in general, it is possible to ensure an adequate interval between the maximum and the other partial results, as is the case for correlation over frequency.

A check is then carried out to determine whether the (first) ratio derived from the time correlation exceeds a previously specified first minimum value, and whether the (second) ratio derived from the correlation carried out over frequency exceeds a previously specified second minimum value. If at least the first ratio exceeds the minimum value or, optionally, if both ratios exceed the minimum values specified for them, then the received signal is regarded as being system-conformal. If at least one of the conditions is not satisfied, then the signal is regarded as not being system-conformal.

Depending on the result, a received signal is designated as being "system-conformal" and/or "present", or "not system-conformal" and/or "not present" during the search or during an attempt to receive a specific signal or while reception is taking place.

The checks carried out result in a high level of confidence in the outcome, and the probability of a false outcome is extremely low. This means that the next steps can be carried out selectively. If the result is negative (that is to say no system conformity) it is, for example, no longer necessary to start decoding the signal in order to check the conformity once again. This allows a large amount of time to be saved in signal search processes, and thus avoids unnecessary waiting time for the user of the receiver.

Thus, depending on the present designation status, during the search process or in the case of a received sample, either the further decoding of the signal is started, the search process is continued, or the "not present" information is output for the received sample.

If it is intended to continue the tuning process on the basis of the results described above, fine AFC may now be carried out. To this end, for example, the phase changes between in each case two successive symbols in the continuous pilot signals are determined continuously and individually, the results are averaged, the final result determined in this way is used to calculate a frequency error, and this frequency error is used to carry out a frequency correction of the signal before the FFT. The final results or frequency errors determined successively symbol-by-symbol can advantageously also be combined and filtered over a number of symbols.

Frame synchronisation, fine time synchronisation and sampling clock adjustment can then be carried out. This is done, for example, by time evaluation (pulse response) of the "scattered pilots" and corresponding correction of the sampling clock reference oscillator, a plurality of values following one another in time (once again) expediently being combined and filtered.

Even during normal reception, it is expedient to carry out the check of the coarse time and frequency synchronisation (as described above) at certain intervals. This allows quick detection of a signal failure, deterioration in the reception conditions, or loss of synchronisation in the receiver. The conditions for this are that $\Delta t$ and $\Delta f$ exceed the limit values, or the calculated ratios are less than the minimum values. The expression $\Delta t$ in this case means the error between the centre of the pulse response and the nominal position. Any necessary countermeasures can be initiated quickly. If one wished to derive the identification of such a state from the decoder processes (for example from a sharp rise in the error rate), then, under some circumstances, this would result in the loss of a very large amount of time.

In the case of synchronisation monitoring or continuous monitoring of the signal or of reception, in the situation where the designation status changes to "not system-conformal", a monitoring or warning signal is emitted to the other parts of the receiver so that, in certain conditions - for example failure of a number of symbols - appropriate measures may be initiated, such as "freezing" of the last acceptable image and/or muting of the audio channel.

Further status messages, such as a continuously set error flag in the Viterbi decoder, may also advantageously be evaluated for identification and/or designation of the signal status during continuous operation.

One advantage of the invention is that the reliability of signal identification is considerably improved and the identification takes place at the earliest possible point within the signal decoding at the receiving end, and thus also at the earliest possible time, so that it is not necessary to initiate any interruptions in reproduction. On the other hand, however, an interruption that is absolutely essential takes place quickly. This allows unacceptable disturbances, such as the failure or the incorrect decoding of a number of pixel blocks, or even all the pixel blocks, in a frame as well as loud or abrupt interference noise in the audio, to be very largely avoided.

In principle, the method according to the invention consists in that, in order to receive multicarrier digital signals which are arranged in temporal-spectral frames, contain data symbols having a guard interval, a wanted symbol length $T_u$ and reference information, and which can be transmitted in various types of modes, the following steps are carried out for tuning during reception or for checking the system conformity of the received signals:

- coarse time synchronisation in which the digital signal is correlated in the time domain with the digital signal shifted in time by various values of $T_u$ corresponding to the possible modes, the present mode being determined from the position and the magnitudes of maxima of the correlation values and the present guard interval being determined from intervals between maxima of the correlation values and a sampling window, which results from this and has a length corresponding to $T_u$, then being set for transformation means and subsequent signal evaluation;
- coarse AFC correction with the aid of multiplier means arranged upstream of the transformation means, and with the aid of coarse AFC means arranged downstream of the transformation means, information items (which correspond to the arrangement layout of the reference information items) relating to the present symbol being taken from the output signal of the transformation means and being correlated in the coarse AFC means with a defined data layout, the nature of this correlation being chosen in accordance with the present mode;
- qualitative evaluation of the results of the coarse time synchronisation and of the correlation results associated with the coarse AFC correction, in order to determine the system conformity and reception quality of the digital signals.

Advantageous developments of the method according to the invention result from the associated, dependent claims.

In principle, the receiver according to the invention for multicarrier digital signals which are arranged in temporal-spectral frames contain data symbols having a guard interval and a wanted symbol length $T_u$ and reference information, and which can be transmitted in various types of modes, is provided with:

- multiplier means and transformation means for the digital signal;
  coarse time synchronisation means, in which, for tuning during reception or for checking the system conformity of the received signals, the digital signal is correlated in the time domain with the digital signal shifted in time by various values of $T_u$ corresponding to the possible modes, the present mode being determined from the position and the magnitudes of maxima of the correlation values and the present guard interval being determined from intervals between maxima of the correlation values, and a sampling window, which results from this and has a length corresponding to $T_u$, then being set for transformation means and the subsequent signal evaluation;
- coarse AFC means for multiplier means arranged upstream of the transformation means, in which coarse AFC means coarse AFC correction is carried out with the aid of information items (which correspond to the arrangement layout of the reference information items) of the present symbol, which information items are taken from the output signal of the transformation means and are correlated in the coarse AFC means with a defined data layout, the nature of this correlation being chosen in accordance with the present mode;

- evaluation means for qualitative evaluation of the results of the coarse time synchronisation means and the correlation results which are determined in the coarse AFC means and determine the system conformity and reception quality of the digital signals.

Advantageous developments of the receiver according to the invention result from the associated, dependent claims.

Drawing

An exemplary embodiment of the invention is described with reference to the drawing.

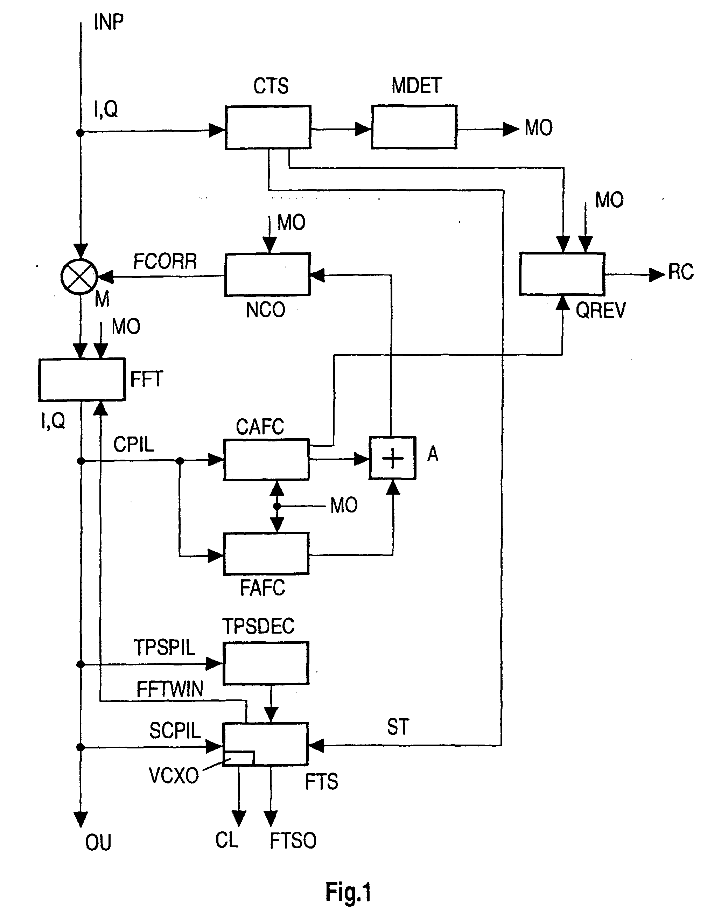

Fig. 1 shows the block diagram of a receiver according to the invention.

Exemplary embodiments

In the receiver according to Fig. 1, coarse synchronisation is initially carried out for the digital input signal INP, in coarse time synchronisation means CTS. In this case, the time signal is correlated with the time signal shifted by the duration of one wanted symbol $T_u$, for example 2 to 5 times per data frame. During this correlation, samples of different length $T_u$ are used, depending on the respective mode, and the filtered or averaged correlation result maxima obtained from this are then used in mode detector means MDET to deduce the present mode MO (for example 2K or 8K mode), for example by comparing the maxima with a stored threshold value. MDET emits corresponding mode information MO.

If no usable correlation result maximum is obtained, the correlation steps in CTS can be repeated. The interval between the correlation maxima is used by the CTS to determine the guard interval used, taking account of the mode, and subsequently to position a sampling window, for example for once-off setting of a counter, which is synchronised to the symbol sequence $(T_u+\Delta)$, in the CTS, which emits a time window of duration $T_u$, for example by means of a start signal ST which is fed to fine time synchronisation means FTS. The position of the sampling window FFTWIN and of the sampling clock is corrected in the FTS by means of a basic oscillator VCX0 used for this purpose.

The input signal INP, which consists of an I element a Q element, is multiplied in a multiplier M by a frequency correction signal FCORR which originates from an oscillator NCO.

The output signal from M selected by FFTWIN is converted in Fast Fourier Transformation means FFT to the frequency domain and, finally, forms the output signal OU, which consists of an I element and a Q element.

If the mode has been correctly identified and the sampling window has been positioned approximately correctly, coarse AFC can be carried out by coarse AFC means CAFC. To this end, the intended continuous pilot signals CPIL of the present symbol in a data frame are taken from the output signal from the FFT and are correlated in the CAFC with a defined layout (45 positions for the 2K mode, 177 positions for the 8K mode), to be precise over $\pm16$ shifts for the 2K mode and $\pm64$ shifts for the 8K mode. The type of correlation is chosen depending on the MO.

In order to improve the coarse AFC, a plurality of such results can be combined or processed together over a specific number of symbols, for example 3 to 10, for example by averaging, majority formation or low-pass filtering. The maximum of the correlation process or the magnitude derived in a corresponding manner from a plurality of such maxima results in the coarse frequency error $\Delta f = p'^*Fs$ and is used as a control signal for the oscillator NCO. The next evaluation may be carried out after a certain interval, for example 3 to 6 times per frame. If $\Delta f$ is less than a predetermined value $D_{max}$ (for example $D_{max} = F_s/3$), the corresponding NCO tuning can be retained initially and a changeover can be made to fine AFC in a fine-AFC means FAFC, to which the intended continuous pilot signals CPIL of the present symbol are likewise fed.

The output signals from the CAFC and FAFC are combined in a combiner A and are supplied as a common control signal to NCO.

The correlation results from the CTS and CAFC are evaluated qualitatively in an evaluation circuit QREV. QREV likewise receives the mode information MO for this purpose. The output signal RC from QREV then controls corresponding parts of the receiver.

After positioning of the sampling window and/or achieving $\Delta f < D_{max}$, the abovementioned conditions are checked at specific time intervals, for the purpose of synchronisation monitoring. For example, if the result is negative 2 to 10 times, a restart is carried out using coarse time synchronisation in the CTS.

Depending on the previous tuning result, the received signal is designated in the receiver as being "system-conformal" and/or "present" or "not system-conformal" and/or "not present". Depending on this present designation status, during the search process or in the case of a received sample, either the further decoding of the signal is initiated, or the search process is continued, or the information "not present" is output for the received sample.

If it is intended to continue the tuning process, fine AFC may now be carried out. To this end, the phase change in the continuous pilot signals CPIL is determined from symbol to symbol, and is averaged over all the pilot signals CPIL (45 for the 2K mode, 177 for the 8K mode). These mean values may be low-pass filtered and, since they are proportional to Δf, can likewise be fed to the oscillator NCO, for example by means of combination in A, but with a reduced gradient.

A frame synchronisation and fine time synchronisation or sampling clock adjustment, respectively, are then carried out.

This is done by evaluating the TPS pilot cells TPSPIL which are taken from the output signal in the FFT and are decoded in a TPS decoder TPSDEC. The output signal from the latter is likewise fed to the fine time synchronisation means FTS and results in a corresponding correction of the basic oscillator VCX0 in order to obtain the sampling clock CL, as well as correction of the position of the sampling window FFTWIN. The frame start (FTS output signal FTSO) and the position of the "scattered pilots" are determined with the aid of the sync sequence of the TPS pilot cells, by correlation. The sampling clock CL is fed to all the circuit parts illustrated in Fig. 1.

The "scattered pilots" can be interpolated in time in the FTS such that every third carrier may be regarded as a "scattered pilot". The pulse response is determined on the basis of the "scattered pilots" interpolated over time, with the aid of division by the specified "scattered pilots" nominal values and inverse FFT.

The discrepancy between the centre of the pulse response and a nominal position desired for optimum reception is then determined. This process is advantageously repeated 3 to 7 times per frame. The result is advantageously filtered block-by-block, and is then further-processed. The sampling clock reference oscillator VCX0 in the FTS is then corrected from the magnitude and direction of the discrepancy determined in this way. This correction can also be carried out by means of the oscillator NCO and the multiplier M. The NCO may contain a digital PLL.

The invention may be used in DVB receivers or in receivers for comparable digital signals, such as DAB receivers as well. The indicated numerical values are then changed as appropriate, and the individual synchronisation or checking steps are matched to the reference or synchronisation data currently being transmitted in the frames. In the case of the DAB receiver, the method described in EP-A-0 786 889 (based on CAZAC symbols) can then be used instead of the coarse AFC correlation method (based on continuous pilot signals) described here. The qualitative evaluation of the achieved correlation results is essentially identical. The evaluations according to the invention are particularly advantageous in combined receivers (DAB and DVB-T, or digital and analogue).

### Claims

1.  Method for evaluating the system conformity and reception quality of a received multicarrier digital signal (INP) which is arranged in temporal-spectoral frames and contains data symbols having a guard interval and a wanted symbol length $T_u$ and reference information (CPIL, SCPIL, TPSPIL), and which can be transmitted in various types of modes (MO, 2k, 8k), said method including the steps:

    - performing a coarse time synchronisation (CTS) in which said multicarrier digital signal (INP) is correlated in the time domain with said multicarrier digital signal shifted in time;
    - performing coarse automatic-frequency-control correction, denoted coarse AFC, using
      multiplier means (M) to a first input of which said multicarrier digital signal (INP) is fed,
      time-frequency Fourier transformation means (FFT) that are arranged downstream the output of said multiplier means and that transform a sample window taken from the output signal of said multiplier means,
      coarse AFC means (CAFC) that receive output signals from said time-frequency Fourier transformation means,
      and an oscillator (NCO) which is controlled by a control output signal from said coarse AFC means and which supplies a second input of said multiplier means with a frequency correction signal (FCORR),

    wherein for a current one of said data symbols assumed complex values, which correspond to an assumed predefined arrangement scheme of the reference information items (CPIL) in said multicarrier digital signal, are taken from the output signals of said time-frequency Fourier transformation means and are correlated over frequency in said coarse AFC means with specified values in a corresponding specified reference information item position scheme, and

    wherein a maximum value derived from related correlation results over frequency is used for determining the frequency offset of the corresponding baseband signal and for providing a corresponding control signal to said oscillator in order to carry out coarse frequency correction,
    and wherein said time-frequency Fourier transformation means, said coarse AFC means and said oscillator are operating based on a given one of said various types of modes (MO);

- qualitatively evaluating (QREV) the maximum correlation value and the remaining correlation values associated with said coarse time synchronisation (CTS) and said coarse AFC correction, in order to determine the system conformity and/or the presence of said multicarrier digital signal (INP),

- in said coarse time synchronisation (CTS) said multicarrier digital signal (INP) is shifted in time by various values of $T_u$ corresponding to the possible types of modes, the present mode (MO) being determined (MDET) from the position and the magnitudes of maxima of the time correlation values, the present guard interval being determined from intervals between maxima of the time correlation values, and a sample window having a length corresponding to $T_u$ then being determined for said time-frequency Fourier transformation means (FFT) ; **characterized by**:

- a check is carried out to determine whether a first ratio of the maximum time correlation value to the average value of the other time correlation partial results not associated with the maximum value exceeds a pre-specified first minimum value, and whether a second ratio of the maximum value of the correlations carried out over frequency to the average value of the other correlation partial results over frequency not associated with the maximum value exceeds a pre-specified second minimum value,
and if the first ratio exceeds the first minimum value or both ratios exceed the first and second minimum values, respectively, the received multicarrier digital signal is determined to be system-conform or present, otherwise the received multicarrier digital signal is determined to be not system-conform or not present;

- the correlation steps are repeated if no correlation result maximum above a stored threshold value is obtained from said coarse time synchronisation (CTS).

2. Method according to claim 1, the reference information comprising continuous pilot signals (CPIL), scattered pilot cells (SCPIL) and transmission parameter signalling pilot cells (TPSPIL) denoted TPS pilot cells, wherein in said correlation in said coarse AFC correction, only information that corresponds to said continuous pilot signals is used.

3. Method according to claim 2, wherein a fine time synchronisation is carried out by frame and sampling clock synchronisation means (FTS, TPSDEC) after the qualitative result evaluation, wherein for said fine time synchronisation a synchronisation sequence of TPS pilot cells (TPSPIL) taken from the output signal of the time-frequency Fourier transformation means (FFT) is used to determine the frame position and the position of the scattered pilot cells (SCPIL), which are likewise taken from the output signal of the time-frequency Fourier transformation means (FFT), in the frame, and wherein the error between nominal value and the centre of a pulse response maintained with the aid of the scattered pilot cells is used to adjust a corresponding sampling clock (CL).

4. Method for evaluating the system conformity and reception quality of a received multicarrier digital signal (INP) which is arranged in temporal-spectoral frames and contains data symbols having a guard interval and a wanted symbol length $T_u$ and reference information (CPIL, SCPIL, TPSPIL), and which can be transmitted in various types of modes (MO, 2k, 8k), said method including the steps:

- performing a coarse time synchronisation (CTS) in which said multicarrier digital signal (INP) is correlated in the time domain with said multicarrier digital signal shifted in time;
- performing coarse automatic-frequency-control correction, denoted coarse AFC, using
multiplier means (M) to a first input of which said multicarrier digital signal (INP) is fed,
time-frequency Fourier transformation means (FFT) that are arranged downstream the output of said multiplier means and that transform a sample window taken from the output signal of said multiplier means,
coarse AFC means (CAFC) that receive output signals from said time-frequency Fourier transformation means,
and an oscillator (NCO) which is controlled by a control output signal from said coarse AFC means and which supplies a second input of said multiplier means with a frequency correction signal (FCORR),

wherein for a current one of said data symbols assumed complex values, which correspond to an assumed pre-defined arrangement scheme of the reference information items (CPIL) in said multicarrier digital signal, are taken from the output signals of said time-frequency Fourier transformation means and are correlated over frequency in said coarse AFC means with specified values in a corresponding specified reference information item position scheme, and
wherein a maximum value derived from related correlation results over frequency is used for determining the frequency offset of the corresponding baseband signal and for providing a corresponding control signal to said oscillator in order to carry out coarse frequency correction,

and wherein said time-frequency Fourier transformation means, said coarse AFC means and said oscillator are operating based on a given one of said various types of modes (MO);

- qualitatively evaluating (QREV) the maximum correlation value and the remaining correlation values associated with said coarse time synchronisation (CTS) and said coarse AFC correction in order to determine the system conformity and/or the presence of said multicarrier digital signal (INP),

- in said coarse time synchronisation (CTS) said multicarrier digital signal (INP) is shifted in time by various values of $T_u$ corresponding to the possible types of modes, the present mode (MO) being determined (MDET) from the position and the magnitudes of maxima of the time correlation values, the present guard interval being determined from intervals between maxima of the time correlation values, and a sample window having a length corresponding to $T_u$ then being determined for said time-frequency Fourier transformation means (FFT) ; **characterized by**:

- a check is carried out to determine whether a first ratio of the maximum time correlation value to the average value of the other time correlation partial results not associated with the maximum value exceeds a pre-specified first minimum value, and whether a second ratio of the maximum value of the correlations carried out over frequency to the average value of the other correlation partial results over frequency not associated with the maximum value exceeds a pre-specified second minimum value,
and if the first ratio exceeds the first minimum value or both ratios exceed the first and second minimum values, respectively, the received multicarrier digital signal is determined to be system-conform or present, otherwise the received multicarrier digital signal is determined to be not system-conform or not present ;

- the reference information comprises continuous pilot signals (CPIL), scattered pilot cells (SCPIL) and transmission parameter signalling pilot cells (TPSPIL) denoted TPS pilot cells, wherein in said correlation in said coarse AFC correction, only information that corresponds to said continuous pilot signals is used,
and wherein a fine time synchronisation is carried out by frame and sampling clock synchronisation means (FTS, TPSDEC) after the qualitative result evaluation, wherein for said fine time synchronisation a synchronisation sequence of TPS pilot cells (TPSPIL) taken from the output signal of the time-frequency Fourier transformation means (FFT) is used to determine the frame position and the position of the scattered pilot cells (SCPIL), which are likewise taken from the output signal of the time-frequency Fourier transformation means (FFT), in the frame,
and wherein the error between nominal value and the centre of a pulse response maintained with the aid of the scattered pilot cells is used to adjust a corresponding sampling clock (CL).

5. Method according to claim 3 or 4, the scattered pilot cells (SCPIL) being temporally interpolated in the fine time synchronisation (FTS, TPSDEC) in order to obtain the pulse response.

6. Method according to one of claims 3 to 5, the error from the nominal value being determined more than once, and these results being combined, in the fine time synchronisation (FTS, TPSDEC).

7. Method according to one of claims 1 to 6, wherein in said coarse AFC correction (CAFC) in each case a plurality of correlation results obtained successively in time are averaged, thereby providing said maximum and remaining correlation values for said qualitative evaluation (QREV).

8. Method according to one of claims 1 to 7 wherein, if after performing said coarse AFC correction (CAFC) the frequency error is less than a defined first threshold, a fine AFC (FAFC) is carried out, and wherein a control variable for said fine AFC (FAFC) is derived from a phase change, determined from symbol to symbol, in the continuous pilot symbols (CPIL).

9. Method according to one of claims 1 to 8 wherein, if during reception it is determined that the received signal is no more sytem-conform, a last acceptable image is frozen and/or audio is muted in downstream receiver stages.

10. Method according to one of claims 1 to 9 wherein, after positioning of the sampling window and/or achieving a frequency error which is less than a second threshold value, the coarse AFC correction is checked at specific intervals and, if the frequency error is greater than the second threshold value on more than one occasion, the coarse AFC correction is restarted.

**11.** Receiver for evaluating the system conformity and reception quality of a received multicarrier digital signal (INP) which is arranged in temporal-spectoral frames and contains data symbols having a guard interval and a wanted symbol length $T_u$ and reference information (CPIL, SCPIL, TPSPIL), and which can be transmitted in various types of modes (MO, 2k, 8k), said receiver including:

- coarse time synchronisation means (CTS) for correlating said multicarrier digital signal (INP) in the time domain with said multicarrier digital signal shifted in time;
- multiplier means (M), a first input of which is adapted to receive said multicarrier digital signal (INP),
- time-frequency Fourier transformation means (FFT) that are arranged downstream the output of said multiplier means and that are adapted to transform a sample window from the output signal of said multiplier means,
- coarse AFC means (CAFC) that are adapted to receive output signals from said time-frequency Fourier transformation means, and an oscillator (NCO) which is adapted to be controlled by a control output signal from said coarse AFC means and which is adapted to supply a second input of said multiplier means with a frequency correction signal (FCORR),

wherein for a current one of said data symbols said coarse AFC means are adapted to correlate over frequency assumed complex values, which correspond to an assumed pre-defined arrangement scheme of the reference information items (CPIL) in said multi-carrier digital signal and which are output signals of said time-frequency Fourier transformation means, with specified values in a corresponding specified reference information item position scheme,
and wherein said coarse AFC means are adapted to determine from a maximum value derived from related correlation results over frequency the frequency offset of the corresponding baseband signal, and provide a corresponding control signal to said oscillator in order to carry out coarse frequency correction,
and wherein said time-frequency Fourier transformation means, said coarse AFC means and said oscillator are adapted to operate based on a given one of said various types of modes (MO);

- means (QREV) for qualitatively evaluating the maximum correlation value and the remaining correlation values associated with said coarse time synchronisation (CTS) and said coarse AFC correction in order to determine the system conformity and/or the presence of said multicarrier digital signal (INP),
- said coarse time synchronisation means (CTS) are adapted to shift said multicarrier digital signal in time by various values of $T_u$ corresponding to the possible types of modes;
- a mode detector (MDET) that is arranged downstream said coarse time synchronisation means, which mode detector is adapted to determine the present mode (MO) from the position and the magnitudes of maxima of the time correlation values, and to determine the present guard interval from intervals between maxima of the time correlation values, and to determine a sample window having a length corresponding to $T_u$ for said time-frequency Fourier transformation means (FFT) ;

**characterized by** :

- said means (QREV) for qualitative evaluation are adapted to determine whether a first ratio of the maximum time correlation value to the average value of the other time correlation partial results not associated with the maximum value exceeds a pre-specified first minimum value, and whether a second ratio of the maximum value of the correlations carried out over frequency to the average value of the other correlation partial results over frequency not associated with the maximum value exceeds a pre-specified second minimum value, and if the first ratio exceeds the first minimum value or both ratios exceed the first and second minimum values, respectively the received multicarrier digital signal is determined to be system-conform or present, otherwise the received multicarrier digital signal is determined to be not system-conform or not present ;
- said coarse time synchronisation means (CTS) are adapted to repeat the correlation steps if no correlation result maximum above a stored threshold value is obtained from said coarse time synchronisation (CTS).

**12.** Receiver for evaluating the system conformity and reception quality of a received multicarrier digital signal (INP) which is arranged in temporal-spectoral frames and contains data symbols having a guard interval and a wanted symbol length $T_u$ and reference information (CPIL, SCPIL, TPSPIL), and which can be transmitted in various types of modes (MO, 2k, 8k), said receiver including:

- coarse time synchronisation means (CTS) for correlating said multicarrier digital signal (INP) in the time domain with said multicarrier digital signal shifted in time;

- multiplier means (M), a first input of which is adapted to receive said multicarrier digital signal (INP),
- time-frequency Fourier transformation means (FFT) that are arranged downstream the output of said multiplier means and that are adapted to transform a sample window from the output signal of said multiplier means,
- coarse AFC means (CAFC) that are adapted to receive output signals from said time-frequency Fourier transformation means, and an oscillator (NCO) which is adapted to be controlled by a control output signal from said coarse AFC means and which is adapted to supply a second input of said multiplier means with a frequency correction signal (FCORR),

wherein for a current one of said data symbols said coarse AFC means are adapted to correlate over frequency assumed complex values, which correspond to an assumed pre-defined arrangement scheme of the reference information items (CPIL) in said multi-carrier digital signal and which are output signals of said time-frequency Fourier transformation means, with specified values in a corresponding specified reference information item position scheme,

and wherein said coarse AFC means are adapted to determine from a maximum value derived from related correlation results over frequency the frequency offset of the corresponding baseband signal, and provide a corresponding control signal to said oscillator in order to carry out coarse frequency correction,

and wherein said time-frequency Fourier transformation means, said coarse AFC means and said oscillator are adapted to operate based on a given one of said various types of modes (MO);

- means (QREV) for qualitatively evaluating the maximum correlation value and the remaining correlation values associated with said coarse time synchronisation (CTS) and said coarse AFC correction in order to determine the system conformity and/or the presence of said multicarrier digital signal (INP),
- said coarse time synchronisation means (CTS) are adapted to shift said multicarrier digital signal in time by various values of $T_u$ corresponding to the possible types of modes;
- a mode detector (MDET) that is arranged downstream said coarse time synchronisation means, which mode detector is adapted to determine the present mode (MO) from the position and the magnitudes of maxima of the time correlation values, and to determine the present guard interval from intervals between maxima of the correlation values, and determines a sample window having a length corresponding to $T_u$ for said time-frequency Fourier transformation means (FFT) ;

**characterized by**:

- said means (QREV) for qualitative evaluation are adapted to determine whether a first ratio of the maximum time correlation value to the average value of the other time correlation partial results not associated with the maximum value exceeds a pre-specified first minimum value, and whether a second ratio of the maximum value of the correlations carried out over frequency to the average value of the other correlation partial results over frequency not associated with the maximum value exceeds a pre-specified second minimum value, and if the first ratio exceeds the first minimum value or both ratios exceed the first and second minimum values, respectively, the received multicarrier digital signal is determined to be system-conform or present, otherwise the received multicarrier digital signal is determined to be not system-conform or not present,
- wherein said coarse AFC means are adapted to use in said correlation only information that corresponds to continuous pilot signals, which pilot signals are together with scattered pilot cells (SCPIL) and transmission parameter signalling pilot cells (TPSPIL) denoted TPS pilot cells comprised in said reference information (CPIL);
- a TPS decoder (TPSDEC) and fine time synchronisation means (FTS) which are adapted to carry out a fine time synchronisation by evaluating a synchronisation sequence of TPS pilot cells (TPSPIL) taken from the output signal of the time-frequency Fourier transformation means (FFT), in order to determine the frame position and the position of the scattered pilot cells (SCPIL), which are likewise fed from the output signal of said time-frequency Fourier transformation means to said fine time synchronisation means, in the frame,

wherein the fine time synchronization means are adapted to evaluate the error between a nominal value and the centre of a pulse response obtained with the aid of the scattered pilot cells in order to adjust a corresponding sampling clock (CL).

**Patentansprüche**

1. Verfahren zur Bewertung der Systemkonformität und der Empfangsqualität eines empfangenen digitalen Mehträgersignals (INP), das in zeitlich-spektoralen Rahmen angeordnet ist und Symbole enthält, die ein Schutz-Intervall und eine gewünschte Symbollänge $T_u$ und Referenz-Informationen (CPIL, SCPIL, TPSPIL) haben, und die in verschiedenen Betriebsarten (MO, 2k, 8k) übertragen werden können, wobei das Verfahren die Schritte enthält:

- Ausführen einer groben Zeit-Synchronisation (CTS), in der das digitale Mehrträgersignal (INP) im Zeitbereich mit dem in der Zeit verschobenen digitalen Mehrträgersignal korreliert wird;
- Ausführen einer groben Korrektur der automatischen Frequenzregelung, als grobe AFC bezeichnet, unter Verwendung von:

  Multiplizierer-Mitteln (M), einem ersten Eingang von denen das digitale Mehrträgersignal (INP) zugeführt wird,
  Zeit-Frequenz-Fourier-Transformationsmitteln (FFT), die stromabwärts vom Ausgang der Multiplizierer-Mittel angeordnet sind, und die ein Abtastfenster transformieren, das dem Ausgangssignal der Multiplizierer-Mittel entnommen wird, groben AFC-Mitteln (CAFC), die Ausgangssignale von den Zeit-Frequenz-Fourier-Transformationsmitteln empfangen,
  und einem Oszillator (NCO), der von einem Steuer-Ausgangssignal von den groben AFC-Mitteln gesteuert wird, und der einem zweiten Eingang der Multiplizierer-Mittel ein Frequenz-Korrektursignal (FCORR) zuführt,

wobei für ein gegenwärtiges Datensymbol angenommene komplexe Werte, die einem angenommenen vor-definierten Anordnungsschema der Referenz-Informationselemente (CPIL) in dem digitalen Mehrträgersignal entsprechen, von den Ausgangssignalen der Zeit-Frequenz-Fourier-Transformationsmittel genommen und über der Frequenz in den groben AFC-Mitteln mit spezifizierten Werten in einem entsprechenden spezifizierten Referenz-Informationselement-Positionsschema korreliert werden, und wobei ein von verbundenen Korrelationsergebnissen über der Frequenz abgeleiteter Maximalwert zur Bestimmung des Frequenz-Offsets des entsprechenden Basisbandsignals und zur Erzeugung eines entsprechenden Steuersignals für den Oszillator verwendet wird, um die grobe Frequenzkorrektur auszuführen,
und wobei die Zeit-Frequenz-Fourier-Transformationsmittel, die groben AFC-Mittel und der Oszillator auf der Basis einer der verschiedenen Betriebsarten (MO) arbeiten;

- qualitative Bewertung (QREV) des maximalen Korrelationswertes und der übrigen Korrelationswerte, die der groben Zeitsynchronisation (CTS) und der groben AFC-Korrektur zugeordnet sind, um die System-Komformität und/oder das Vorhandensein des digitalen Mehrträgersignals (INP) zu bestimmen;
- Verschieben des digitalen Mehrträgersignals (INP) in der groben Zeitsynchronisation (CTS) in der Zeit um mehrere Werte von $T_u$ entsprechend den möglichen Betriebsarten, wobei die gegenwärtige Betriebsart (MO) aus der Position der Größe von Maxima der Zeit-Korrelationswerte bestimmt wird, wobei das gegenwärtige Schutzintervall aus Intervallen zwischen Maxima der Zeit-Korrelationswerte bestimmt wird und ein Abtastfenster, das eine Länge hat, die $T_u$ entspricht, dann für die Zeit-Frequenz-Fourier-Transformationsmittel (FFT) bestimmt wird; **gekennzeichnet dadurch, dass** eine Prüfung ausgeführt wird, um zu bestimmen, ob ein erstes Verhältnis des maximalen Zeit-Korrelationswertes zu dem Durchschnittswert der anderen Zeit-Korrelations-Teilergebnisse, die nicht dem maximalen Wert zugeordnet sind, einen vor-spezifizierten ersten minimalen Wert überschreitet, und ob ein zweites Verhältnis des maximalen Wertes der über der Frequenz ausgeführten Korrelationen zu dem Durchschnittswert der anderen Korrelations-Teilergebnisse über der Frequenz, die nicht dem maximalen Wert zugeordnet sind, einen vor-spezifizierten zweiten minimalen Wert überschreitet,
- und wenn das erste Verhältnis den minimalen Wert überschreitet bzw. beide Verhältnisse den ersten und zweiten minimalen Wert überschreiten, bestimmt wird, dass das empfangene digitale Mehrträgersignal systemkonform oder vorhanden ist, andernfalls bestimmt wird, dass das digitale Mehrträgersignal nicht systemkonform oder nicht vorhanden ist;
- Wiederholen der Korrelationsschritte, wenn aus der groben Zeitsynchronisation (CTS) kein maximales Korrelationsergebnis oberhalb eines gespeicherten Schwellwertes erhalten wird.

2. Verfahren nach Anspruch 1, bei dem Referenzinformationen kontinuierliche Pilotsignale (CPIL), gestreute Pilotzellen (SCPIL) und Übertragungs-Parameter signalisierende Pilotzellen (TPSPIL) - TPS-Pilotzellen genannt - umfassen, wobei bei der Korrelation in der groben AFT-Korrektur nur Informationen verwendet werden, die den kontinuierlichen Pilotsignalen entsprechen.

3. Verfahren nach Anspruch 2, bei dem nach der Bewertung des qualitativen Ergebnisses eine feine Zeitsynchronisation durch Rahmen- und Abtast-Takt-Synchronisationsmittel (FTS, TPSDEC) ausgeführt wird, wobei für die feine Zeitsynchronisation eine Synchronisationssequenz von TPS-Pilotzellen (TPSPIL), die dem Ausgangssignal der Zeit-Frequenz-Fourier-Transformationsmittel (FFT) entnommen werden, zur Bestimmung der Rahmenposition und der Position der verstreuten Pilotzellen (SCPIL), die ebenfalls dem Ausgangssignal der Zeit-Frequenz-Fourier-Transformationsmittel (FFT) entnommen werden, in dem Rahmen verwendet werden, und wobei der Fehler zwischen dem Nominalwert und der Mitte eines Impulsansprechens, der mit der Hilfe der verstreuten Pilotzellen aufrechterhalten wird, zur Einstellung eines entsprechenden Abtasttaktes (CL) verwendet wird.

4. Verfahren zur Bewertung der Systemkonformität und der Empfangsqualität eines empfangenen digitalen Mehrträgersignals (INP), das in zeitlich-spektoralen Rahmen angeordnet ist und Symbole enthält, die ein Schutz-Intervall und eine gewünschte Symbollänge $T_u$ und Bezugsinformationen (CPIL, SCPIL, TPSPIL) haben, und die in verschiedenen Betriebsarten (MO, 2k, 8k) übertragen werden können, wobei das Verfahren die Schritte enthält:

- Ausführen einer groben Zeitsynchronisation (CTS), in der das digitale Mehrträgersignal (INP) im Zeitbereich mit dem in der Zeit verschobenen digitalen Mehrträgersignal korreliert wird;
- Ausführen einer groben Korrektur der automatischen Frequenzregelung - als grobe AFC bezeichnet - unter Verwendung von:

 Multiplizierermitteln (M) einem ersten Eingang, von denen das digitale Mehrträgersignal (INP) zugeführt wird,
 Zeit-Frequenz-Fourier-Transformationsmitteln (FFT), die stromabwärts vom Ausgang der Multiplizierermittel angeordnet sind, und die ein Abtastfenster transformieren, das dem Ausgangssignal der Multiplizierermittel entnommen wird,
 groben AFC-Mitteln (CAFC), die Ausgangssignale von den Zeit-Frequenz-Fourier-Transformationsmitteln empfangen, und einem Oszillator (NCO), der von einem Steuer-Ausgangssignal von den groben AFC-Mitteln gesteuert wird, und der einem zweiten Eingang der Multiplizierermittel ein Frequenz-Korrektursignal (FCORR) zuführt,

 wobei für ein gegenwärtiges Datensymbol angenommene komplexe Werte, die einem angenommenen vor-definierten Anordnungsschema der Bezugs-Informationselemente (CPIL) in dem digitalen Mehrträgersignal entsprechen, von den Ausgangssignalen der Zeit-Frequenz-Fourier-Transformationsmittel genommen und über der Frequenz in den groben AFC-Mitteln mit spezifizierten Werten in einem spezifizierten Bezugs-Informationselement-Positionsschema korreliert werden, und wobei ein von verbundenen Korrelationsergebnissen über der Frequenz abgeleiteter maximaler Wert zur Bestimmung des Frequenz-Offsets des entsprechenden Basisbandsignals und zur Erzeugung eines entsprechenden Steuersignals für den Oszillator verwendet wird, um eine grobe Frequenzkorrektur durchzuführen;
 und wobei die Zeit-Frequenz-Fourier-Transformationsmittel, die groben AFC-Mittel und der Oszillator auf der Basis einer der verschiedenen Betriebsarten arbeiten;

- qualitative Bewertung (QREV) des maximalen Korrelationswertes und der übrigen Korrelationswerte, die der groben Zeit-Synchronisation (CTS) und der groben AFC-Korrektur zugeordnet sind, um die System-Konformität und/oder das Vorhandensein des digitalen Mehrträgersignals (INP) zu bestimmen;
- Verschieben des digitalen Mehrträgersignals (INP) in der groben Zeit-Synchronisation (CTS) in der Zeit um mehrere Werte von $T_u$, die den möglichen Betriebsarten entsprechen, wobei die gegenwärtige Betriebsart (MO) aus der Position und den Größen von Maxima der Zeit-Korrelationswerte bestimmt wird (MDET), wobei das gegenwärtige Schutzintervall aus Intervallen zwischen Maxima der Zeit-Korrelationswerte bestimmt wird, und ein Abtastfenster, das eine Länge hat, die $T_u$ entspricht, dann für die Zeit-Frequenz-Fourier-Transformationsmittel (FFT) bestimmt wird, **dadurch gekennzeichnet, dass**:

- eine Prüfung ausgeführt wird, um zu bestimmen, ob ein erstes Verhältnis des maximalen Zeit-Korrelationswertes zu dem Durchschnittswert der anderen Zeit-Korrelations-Teilergebnisse, die nicht dem maximalen Wert zugeordnet sind, einen vor-spezifizierten ersten minimalen Wert überschreiten, und ob ein zweites Verhältnis des maximalen Wertes der über der Frequenz ausgeführten Korrelationen zu dem Durchschnittswert der anderen Korrelations-Teilergebnisse über der Frequenz, die nicht dem maximalen Wert zugeordnet sind, einen vor-spezifizierten zweiten minimalen Wert überschreitet,
- und wenn das erste Verhältnis den ersten minimalen Wert überschreitet bzw. beide Verhältnisse den ersten und zweiten minimalen Wert überschreiten, bestimmt wird, dass das empfangene digitale Mehrträgersignal systemkonform oder vorhanden ist, andernfalls bestimmt wird, dass das digitale Mehrträgersignal nicht systemkonform oder nicht vorhanden ist:

- die Referenz-Informationen kontinuierliche Pilotsignale (CPIL), gestreute Pilotzellen (SCPIL) und Übertragungs-Parameter signalisierende Pilotzellen (TPSPIL), die als TPS-Pilotzellen bezeichnet werden, umfassen, wobei bei der Korrelation von der groben AFC-Korrektur nur Informationen verwendet werden, die den kontinuierlichen Pilotsignalen entsprechen,
- und wobei nach der Bewertung des qualitativen Ergebnisses eine feine Zeit-Synchronisation durch Rahmenund Abtasttast-Synchronisationsmittel (FTS, TPSDEC) durchgeführt wird, wobei für die feine Zeit-Synchronisation eine Synchronisationssequenz von TPS-Pilotzellen (TPSPIL), die dem Ausgangssignal der Zeit-Frequenz-Fourier-Transformationsmittel (FFT) entnommen wird, zur Bestimmung der Rahmen-Position und der Position der verstreuten Pilotzellen (SCPIL), die ebenfalls dem Ausgangssignal der Zeit-Frequenz-Fourier-Transformationsmittel entnommen werden, in dem Rahmen verwendet werden, und wobei der Fehler zwischen dem Nominalwert und der Mitte eines Impulsansprechens, der mit der Hilfe der verstreuten Pilotzellen aufrechterhalten wird, zur Einstellung eines entsprechenden Abtasttaktes (CL) verwendet wird.

5. Verfahren nach Anspruch 3 oder 4, bei dem die verstreuten Pilotzellen (SCPIL) zeitlich in der feinen Zeit-Synchronisation (FTS, TPSDEC) interpoliert werden, um das Impulsansprechen zu erhalten.

6. Verfahren nach einem der Ansprüche 3 bis 5, bei dem der Fehler von dem nominalen Wert mehr als einmal bestimmt wird und diese Ergebnisse in der feinen Zeit-Synchronisation (FTS, TPSDEC) kombiniert werden.

7. Verfahren nach einem der Ansprüche 1 bis 6, bei dem in der groben AFC-Korrektur (CAFC) in jedem Fall von einer Mehrzahl von Korrelationsergebnissen, die in der Zeit nacheinander gewonnen werden, der Durchschnitt gebildet wird, um dadurch den maximalen und die übrigen Korrelationswerte für die qualitative Bewertung (QREV) zu erzeugen.

8. Verfahren nach einem der Ansprüche 1 bis 7, bei dem, wenn nach Ausführung der groben AFC-Korrektur (CAFC) der Frequenzfehler kleiner als ein definierter erster Schwellwert ist, eine feine AFC (FAFC) ausgeführt wird, und bei dem ein für die feine AFC (FAFC) variable Steuerung von einer Phasenänderung abgeleitet wird, die von Symbol zu Symbol in den kontinuierlichen Pilotsymbolen (CPIL) bestifmmt wird.

9. Verfahren nach einem der Ansprüche 1 bis 8, bei dem, falls während des Empfangs bestimmt wird, dass das empfangene Signal nicht mehr systemkonform ist, ein letztes akzeptables Bild eingefroren wird und/oder Audiosignale in stromabwärtigen Empfängerstufen stumm geschaltet werden.

10. Verfahren nach einem der Ansprüche 1 bis 9, bei dem nach Positionieren des Abtastfensters und/oder Erzielen eines Frequenzfehlers, der kleiner als ein zweiter Schwellwert ist, die grobe AFC-Korrektur in spezifischen Intervallen geprüft wird, und wenn der Frequenzfehler bei mehr als einer Gelegenheit größer als der zweite Schwellwert ist, die grobe AFC-Korrektur erneut gestartet wird.

11. Empfänger zum Bewerten der Systemkonformität und der Empfangsqualität eines empfangenen Mehrträgersignals (INP), das in zeitlich-spektoralen Rahmen angeordnet ist und Datensymbole enthält, die ein Schutzintervall und eine gewünschte Symbollänge $l_u$ und Referenz-Informationen (CPIL, SCPIL, TPSPIL) haben, und die in verschiedenen Betriebsarten (MO, 2k, 8k) übertragen werden können, wobei der Empfänger enthält:

- grobe Zeit-Synchronisationsmittel (CTS) zum Korrelieren des digitalen Mehrträgersignals (INP) im Zeitbereich mit dem in der Zeit verschobenen digitalen Mehrträgersignal;
- Multiplizierermittel (M), von denen ein erster Eingang das digitale Mehrträgersignal (INP) empfängt;
- Zeit-Frequenz-Fourier-Transformationsmittel (FFT), die stromabwärts von dem Ausgang der Multiplizierermittel angeordnet sind und ein Abtastfenster aus dem Ausgangssignal der Multiplizierermittel transformieren;
- grobe AFC-Mittel (CAFC), die Ausgangssignale von den Zeit-Frequenz-Fourier-Transformationsmitteln empfangen, und einen Oszillator (NCO), der von einem Steuer-Ausgangssignal der groben AFC-Mittel gesteuert wird, und der einem zweiten Eingang der Miltiplizierermittel ein Frequenz-Korrektursignal (FCORR) zuführt,

wobei für ein gegenwärtiges Datensymbol die groben AFC-Mittel über der Frequenz angenommene komplexe werte, die einem angenommenen vor-definierten Anordnungsschema der Referenz-Informationselemente (CPIL) in dem digitalen Mehrträgersignal entsprechen, und die Ausgangssignale der Zeit-Frequenz-Fourier-Transformationsmittel sind, mit spezifischen Werten in einem entsprechenden spezifizierten Referenz-Informationselement-Positionsschema korreliert werden, und wobei die groben AFC-Mittel aus einem maximalen Wert, der von verbundenen Korrelationsergebnissen über der Frequenz abgeleitet wurde, den Frequenz-Offset des entsprechenden Basisbandsignals bestimmen und ein entsprechendes Steuersignal an den Oszillator liefern, um eine grobe Frequenzkorrektur durchzuführen, und wobei die Zeit-Frequenz-Fourier-Transformationsmittel, die groben AFC-Mittel und der Oszillator auf der Basis einer der verschiedenen Betriebsarten (MO) arbeiten;

- Mittel (QREV) zur qualitativen Bewertung des maximalen Korrelationswertes und der übrigen Korrelationswerte, die der groben Zeit-Synchronisation (CTS) und der groben AFC-Korrektur zugeordnet sind, um die System-Konformität und/oder das Vorhandensein des digitalen Mehrträgersignals (INP) zu bestimmen;

wobei die groben Zeit-Synchronisationsmittel (CTS) das digitale Mehrträgersignal in der Zeit um mehrere Werte von $T_u$ entsprechend den möglichen Betriebsarten verschieben;

- einen stromabwärts von den groben Zeit-Synchronisationsmitteln angeordneten Betriebsarten-Detektor (MDET), um die gegenwärtige Betriebsart (MO) aus der Position und den Größen der Maxima der Zeit-Korrelationswerte zu bestimmen, und um ein Abtastfenster mit einer $T_u$ entsprechenden Länge für die Zeit-Frequenz-Fourier-Transformationsmittel (FFT) zu bestimmen; **gekennzeichnet dadurch: dass** die Mittel (QREV) zur qualitativen Bewertung bestimmen, ob ein erstes Verhältnis des maximalen Zeit-Korrelationswertes zu dem Durchschnittswert der anderen Zeit-Korrelations-Teilergebnissen, die nicht dem maximalen Wert zugeordnet sind, einen vor-spezifizierten ersten minimalen Wert überschreitet, und ob ein zweites Verhältnis des maximalen Wertes der über der Frequenz ausgeführten Korrelationen zu dem Durchschnittswert der anderen Korrelations-Teilergebnisse über der Freqnez, die nicht dem maximalen Wert zugeordnet sind, einen vor-spezifizierten zweiten minimalen Wert überschreitet, und wenn das erste Verhältnis den ersten minimalen Wert überschreitet bzw. beide Verhältnisse den ersten und zweiten minimalen Wert überschreiten, bestimmt wird, dass das empfangene digitale Mehrträgersignal systemkonform oder vorhanden ist, andernfalls bestimmt wird, dass das empfangene digitale Mehrträgersignal nicht systemkonform oder nicht vorhanden ist;
- dass die groben Zeit-Synchronisationsmittel (CTS) die Korrelationsschritte wiederholen, wenn kein maximales Korrelationsergebnis oberhalb eines gespeicherten Schwellwertes von der groben Zeit-Synchronisation (CTS) erhalten wird.

12. Empfänger zum Bewerten der Systemkonformität und der Empfangsqualität eines empfangenen digitalen Mehrträgersignals (INP), das in zeitlich-spektoralen Rahmen angeordnet ist und Datensymbole enthält, die ein Schutzintervall und eine gewünschte Symbollänge $T_u$ und Referenz-Informationen (CPIL, SCPIL, TPSPIL) haben, und die in verschiedenen Betriebsarten (MO, 2k, 8k) übertragen werden können, wobei der Empfänger enthält:

- grobe Zeit-Synchronisationsmittel (CTS), um das digitale Mehrträgersignal (INP) in dem Zeitbereich mit dem in der Zeit verschobenen digitalen Mehrträgersignal zu korrelieren;
- Multiplizierermittel (M), von denen ein erster Eingang das digitale Mehrträgersignal (INP) empfängt;
- Zeit-Frequenz-Fourier-Transformationsmittel (FFT), die stromabwärts vom Ausgang der Multiplizierermittel angeordnet sind, und die ein Abtastfenster von dem Ausgangssignal der Multiplizierermittel transformieren;
- grobe AFC-Mittel (CAFC), die Ausgangssignale von den Zeit-Frequenz-Fourier-Transformationsmitteln empfangen, und einen Oszillator (NCO), der von einem Steuer-Ausgangssignal von den groben AFC-Mitteln gesteuert wird, und der einem zweiten Eingang der Multiplizierermittel ein Frequenz-Korrektursignal (FCORR) zuführt,

wobei für ein gegenwärtiges Datensymbol die groben AFC-Mittel über der Frequenz angenommene komplexe Werte, die einem angenommenen vor-definierten Anordnungsschema der Referenz-Informationselemente (CPIL) in dem digitalen Mehrträgersignal entsprechen, und die Ausgangssignale der Zeit-Frequenz-Fourier-Transformationsmittel sind, mit spezifischen Werten in einem entsprechenden spezifizierten Referenz-Informationselemente-Positionsschema korreliert werden, und wobei die groben AFC-Mittel aus einem maximalen Wert, der von verbundenen Korrelationsergebnissen über der Frequenz abgeleitet wurde, den Frequenz-Offset des entsprechenden Basisbandsignals bestimmen und ein entsprechendes Steuersignal an den Oszillator liefern, um die grobe Frequenzkorrektur auszuführen, und wobei die Zeit-Frequenz-Fourier-Transformationsmittel, die groben AFC-Mittel und der Oszillator auf der Basis einer der verschiedenen Betriebsarten (MO) arbeiten;

- Mittel (QREV) zur qualitativen Bewertung des maximalen Korrelationswertes und der übrigen Korrelationswerte, die der groben Zeit-Synchronisation (CTS) und der groben AFC-Korrektur zugeordnet sind, um die System-Konformität und/oder das Vorhandensein des digitalen Mehrträgersignals (INP) zu bestimmen;

- die groben Zeit-Synchronisationsmittel (CTS) das digitale Mehrträgersignal in der Zeit um mehrere Werte von $T_u$ entsprechend den möglichen Betriebsarten verschieben;
- einen stromabwärts von den groben Zeit-Synchronisationsmittel angeordneten Betriebsarten-Detektor (MDET), der die gegenwärtige Betriebsart (MO) aus der Position und den Größen der Maxima der Zeit-Korrelationswerte bestimmt, und um das gegenwärtige Schutzintervall aus den Intervallen zwischen Maxima der Korrelationswerte zu bestimmen, und um ein Abtastfenster mit einer $T_u$ entsprechenden Länge für die Zeit-Frequenz-Fourier-Transformationsmittel (FFT) zu bestimmen; **gekennzeichnet dadurch, dass** die Mittel (QREV) zur qualitativen Bewertung bestimmen, ob ein erstes Verhältnis des maximalen Zeit-Korrelationswertes zu den anderen Zeit-Korrelations-Teilergebnissen, die nicht dem maximalen Wert zugeordnet sind, einen vor-spezifizierten ersten minimalen Wert überschreitet, und ob ein zweites Verhältnis des maximalen Wertes der über der Frequenz ausgeführten Korrelationen zu dem Durchschnittswert der anderen Korrelations-Teilergebnisse, die nicht dem maximalen Wert zugeordnet sind, einen vor-spezifizierten zweiten minimalen Wert überschreitet, und wenn das erste Verhältnis den ersten minimalen Wert überschreitet bzw. beide Verhältnisse den ersten und zweiten Minimalwert überschreiten, bestimmt wird, dass das digitale Mehrträgersignal systemkonform oder vorhanden ist, andernfalls bestimmt wird, dass das empfangene digitale Mehrträgersignal nicht systemkonform oder nicht vorhanden ist;
- dass die groben AFC-Mittel in der Korrelation nur Informationen verwenden, die kontinuierlichen Pilotsignalen entsprechen, die zusammen mit verstreuten Pilotzellen (SCPIL) und Übertragungs-Parameter signalisierenden Pilotzellen (TPSPIL) - TPS-Pilotzellen genannt - in den Referenz-Informationen (CPIL) enthalten sind;
- dass ein TPS-Dekodierer (TPSDEC) und feine Zeit-Synchronisationsmittel (FTS) vorgesehen sind, die eine feine Zeit-Synchronisation durch Bewerten einer Synchronisationssequenz aus TPS-Pilotzellen (TPSPIL), die dem Ausgangssignal der Zeit-Frequenz-Fourier-Transformationsmittel (FFT) entnommen werden, ausführen, um die Rahmenposition und die Position der verstreuten Pilotzellen (SCPIL), die ebenfalls vom Ausgangssignal der Zeit-Frequenz-Fourier-Transformationsmittel den feinen Zeit-Synchronisationsmitteln zugeführt werden, in dem Rahmen zu bestimmen;
- wobei die feinen Zeit-Synchronisationsmittel den Fehler zwischen einem nominalen Wert und der Mitte eines Impulsansprechens bewerten, der mit Hilfe der verstreuten Pilotzellen erhalten wird, um einen entsprechenden Abtasttakt (CL) einzustellen.

## Revendications

1. Méthode pour évaluer la conformité du système et la qualité de réception d'un signal numérique multiporteur reçu (INP) qui est organisé en trames temporelles-spectrales et contient des symboles de données possédant un intervalle de garde et une longueur de symbole souhaitée $T_u$ et des informations de référence (CPIL, SCPIL, TPSPIL), et qui peut être transmis dans divers types de modes (MO, 2k, 8k), ladite méthode incluant les étapes :

- de réalisation d'une synchronisation temporelle approximative (CTS) dans laquelle ledit signal, numérique multiporteur (INP) est corrélé dans le domaine temporel avec ledit signal numérique multiporteur décalé dans le temps ;
- de réalisation d'une correction de contrôle de fréquence automatique approximative, désignée AFC approximative, à l'aide
  de dispositifs multiplicateurs (M) à la première entrée desquels est transmis ledit signal numérique multiporteur (INP),
  de dispositifs de transformation de Fourier de temps-fréquence (FFT) qui sont aménagés en flux descendant de la sortie desdits dispositifs multiplexeurs et qui transforment une fenêtre d'échantillonnage extraite du signal de sortie desdits dispositifs multiplexeurs,
  de dispositifs d'AFC approximative (CAFC) qui reçoivent des signaux de sortie desdits dispositifs de transformation de Fourier de temps-fréquence,
  et d'un oscillateur (NCO) qui est contrôlé par un signal de sortie de contrôle desdits dispositifs d'AFC approximative et qui fournit à une seconde entrée desdits dispositifs multiplicateurs un signal de correction d'erreur (FCORR),

où pour un desdits symboles de données actuels, des valeurs complexes supposées, qui correspondent à un schéma d'aménagement prédéfini supposé des éléments d'information de référence (CPIL) dans ledit signal numérique multiporteur, sont extraites des signaux de sortie desdits dispositifs de transformation de Fourier de temps-fréquence (FFT) et sont corrélées sur une fréquence dans lesdits dispositifs d'AFC approximative avec des valeurs spécifiées dans un schéma de position d'élément d'information de référence spécifié, et où une valeur maximum dérivée de résultats de corrélation connexes sur la fréquence est utilisée pour déterminer le décalage de fréquence dudit signal de bande de base correspondant et pour fournir un signal de contrôle correspondant audit oscillateur afin d'effectuer une correction de fréquence approximative,

et où lesdits dispositifs de transformation de Fourier de temps-fréquence, lesdits dispositifs d'AFC approximative et ledit oscillateur fonctionnent en fonction d'un des divers types de modes (MO) donnés ;

- d'évaluation qualitative (QREV) de la valeur de corrélation maximum et des valeurs de corrélation restantes associées avec ladite synchronisation temporelle approximative (CTS) et ladite correction AFC approximative afin de déterminer la conformité du système et/ou la présence dudit signal numérique multiporteur (INP),

- dans ladite synchronisation temporelle approximative (CTS) ledit signal numérique multiporteur (INP) est décalé en temps de diverses valeurs de $T_u$ correspondant aux possibles types de modes, le présent mode (MO) étant déterminé (MDET) à partir de la position et des grandeurs de maxima des valeurs de corrélation temporelle, et une fenêtre d'échantillonnage ayant une longueur correspondant à Tu étant alors déterminée pour ladite transformation de Fourier de temps-fréquence (FFT) ;

**caractérisée par** :

- une vérification est effectuée pour déterminer si un premier ratio de la valeur de corrélation temporelle maximum sur la valeur moyenne des autres résultats partiels de la corrélation temporelle non associés à la valeur maximum est supérieur à une première valeur minimum préalablement spécifiée, et si un second ratio de la valeur maximum des corrélations effectuées sur une fréquence sur la valeur moyenne des autres résultats partiels de corrélation sur la fréquence non associés à la valeur maximum est supérieur à une seconde valeur minimum préalablement spécifiée,

et si le premier ratio est supérieur à la première valeur minimum ou les deux ratios sont supérieurs à la première valeur minimum ou les deux ratios sont supérieurs aux première et seconde valeurs minimum, respectivement, le signal numérique multiporteur reçu est déterminé pour être conforme au système ou présent, sinon le signal numérique multiporteur reçu est déterminé pour être non conforme au système ou non présent ;

- les étapes de corrélation sont répétées si aucun maximum de résultat de corrélation supérieur à une valeur seuil stockée n'est obtenu à partir de ladite synchronisation temporelle approximative (CTS).

**2.** Méthode selon la revendication 1, les informations de référence étant composées de signaux pilotes continus (CPIL), de cellules pilotes diffusées (SCPIL) et de cellules pilotes de signalisation de paramètres de transmission (TPSPIL) désignées cellules pilotes, où dans ladite corrélation dans ladite correction d'AFC approximative, seules les informations correspondant auxdits signaux pilotes continus sont utilisées.

**3.** Méthode selon la revendication 2, dans laquelle une synchronisation temporelle fine est effectuée par trame et dispositif de synchronisation (FTS, TPSDEC) après l'évaluation qualitative des résultats, dans laquelle pour ladite synchronisation temporelle fine une séquence de synchronisation de cellules pilotes TPS (TPSPIL) extraites du signal de sortie des dispositifs de transformation de Fourier de temps-fréquence (FFT) est utilisée pour déterminer la position de trame et la position des cellules pilotes diffusées (SCPIL) qui sont également extraites du signal de sortie des dispositifs de transformation de Fourier de temps-fréquence (FFT), dans la trame, et dans laquelle l'erreur entre la valeur nominale et le centre d'une réponse impulsionnelle maintenue à l'aide des cellules pilotes diffusées est utilisée pour régler une horloge d'échantillonnage correspondante (CL).

**4.** Méthode pour évaluer la conformité du système et la qualité de réception d'un signal numérique multiporteur reçu (INP) qui est organisé en trames temporelles-spectrales et contient des symboles de données possédant un intervalle de garde et une longueur de symbole souhaitée $T_u$ et des informations de référence (CPIL, SCPIL, TPSPIL), et qui peut être transmis dans divers types de modes (MO, 2k, 8k), ladite méthode incluant les étapes :

- de réalisation d'une synchronisation temporelle approximative (CTS) dans laquelle ledit signal numérique multiporteur (INP) est corrélé dans le domaine temporel avec ledit signal numérique multiporteur décalé dans le temps ;

- de réalisation d'une correction de contrôle de fréquence automatique approximative, désignée AFC approximative, à l'aide

de dispositifs multiplicateurs (M) à la première entrée desquels est transmis ledit signal numérique multiporteur (INP),

de dispositifs de transformation de Fourier de temps-fréquence (FFT) qui sont aménagés en flux descendant de la sortie dudit dispositif multiplexeur et qui transforment une fenêtre d'échantillonnage extraite du signal de sortie dudit dispositif multiplexeur,

de dispositifs d'AFC approximative (CAFC) qui reçoivent des signaux de sortie desdits

dispositifs de transformation de Fourier de temps-fréquence,

et un oscillateur (NCO) qui est contrôlé par un signal de sortie de contrôle desdits dispositifs d'AFC approximative et qui fournit à une seconde entrée desdits dispositifs multiplicateurs un signal de correction d'erreur (FCORR),

où pour un desdits symboles de données actuel, des valeurs complexes supposées, qui correspondent à un schéma d'aménagement prédéfini supposé des éléments d'information de référence (CPIL) dans ledit signal numérique multiporteur, sont extraites des signaux de sortie dudit dispositif de transformation de Fourier de temps-fréquence (FFT) et sont corrélées sur une fréquence dans ledit dispositif d'AFC approximative avec des valeurs spécifiées dans un schéma de position d'élément d'information de référence spécifié, et où une valeur maximum dérivée de résultats de corrélation connexes sur la fréquence est utilisée pour déterminer le décalage de fréquence dudit signal de bande de base correspondant et pour fournir un signal de contrôle correspondant audit oscillateur afin d'effectuer une correction de fréquence approximative,

et où lesdits dispositifs de transformation de Fourier de temps-fréquence, lesdits dispositifs d'AFC approximative et ledit oscillateur fonctionnent en fonction d'un des divers types de modes (MO) donnés ;

- d'évaluation qualitative (QREV) de la valeur de corrélation maximum et des valeurs de corrélation restantes associées avec ladite synchronisation temporelle approximative (CTS) et ladite correction AFC approximative afin de déterminer la conformité du système et/ou la présence dudit signal numérique multiporteur (INP),
- dans ladite synchronisation temporelle approximative (CTS) ledit signal numérique multiporteur (INP) est décalé en temps par diverses valeurs de $T_u$ correspondant aux possibles types de modes, le présent mode (MO) étant déterminé (MDET) à partir de la position et des grandeurs de maxima des valeurs de corrélation temporelle, et une fenêtre d'échantillonnage ayant une longueur correspondant à Tu étant alors déterminée pour ladite transformation de Fourier de temps-fréquence (FFT) ;

**caractérisée par** :

- une vérification est effectuée pour déterminer si un premier ratio de la valeur de corrélation temporelle maximum sur la valeur moyenne des autres résultats partiels de la corrélation temporelle non associés à la valeur maximum est supérieur à une première valeur minimum préalablement spécifiée, et si un second ratio de la valeur maximum des corrélations effectuées sur une fréquence sur la valeur moyenne des autres résultats partiels de corrélation sur la fréquence non associés à la valeur maximum est supérieur à une seconde valeur minimum préalablement spécifiée, et si le premier ratio est supérieur à la première valeur minimum ou les deux ratios sont supérieurs à la première valeur minimum ou les deux ratios sont supérieurs aux première et seconde valeurs minimum, respectivement, le signal numérique multiporteur reçu est déterminé pour être conforme au système ou présent, sinon le signal numérique multiporteur reçu est déterminé pour être non conforme au système ou non présent ;
- les informations de référence sont composées de signaux pilotes continus (CPIL), de cellules pilotes diffusées (SCPIL) et de cellules pilotes de signalisation de paramètres de transmission (TPSPIL) désignées cellules pilotes, où dans ladite corrélation dans ladite correction d'AFC approximative, seules les informations correspondant auxdits signaux pilotes continus sont utilisées.

et dans laquelle une synchronisation temporelle fine est effectuée par trame et dispositif de synchronisation (FTS, TPSDEC) après l'évaluation qualitative des résultats, dans laquelle pour ladite synchronisation temporelle fine une séquence de synchronisation de cellules pilotes TPS (TPSPIL) extraites du signal de sortie du dispositif de transformation de Fourier de temps-fréquence (FFT) est utilisée pour déterminer la position de trame et la position des cellules pilotes diffusées (SCPIL) qui sont également extraites du signal de sortie du dispositif de transformation de Fourier de temps-fréquence (FFT), dans la trame,

et dans laquelle l'erreur entre la valeur nominale et le centre d'une réponse impulsionnelle maintenue à l'aide des cellules pilotes diffusées est utilisée pour régler une horloge d'échantillonnage correspondante (CL).

5. Méthode selon la revendication 3 ou 4, les cellules pilotes diffusées (SCPIL) étant temporellement interpolées dans la synchronisation temporelle fine (FTS, TPSDEC) afin d'obtenir la réponse impulsionnelle.

6. Méthode selon l'une des revendications 3 à 5, l'erreur de la valeur nominale étant déterminée plusieurs fois, et ces résultats étant combinés, dans la synchronisation temporelle fine (FTS, TPSDEC).

7. Méthode selon l'une des revendications 1 à 6, dans laquelle ladite correction d'AFC approximative (CAFC), dans chaque cas, la moyenne d'une pluralité de résultats de corrélation obtenus successivement en temps est établie, fournissant de ce fait lesdites valeurs de correction maximum et restantes pour ladite évaluation qualitative (QREV).

8. Méthode selon l'une des revendications 1 à 7, dans laquelle, si après avoir effectué une correction AFC approximative (CAFC) l'erreur de fréquence est inférieure à un premier seuil défini, une AFC fine (FAFC) est effectuée, et dans laquelle une variable de contrôle pour ladite AFC fine (FAFC) est dérivée d'un changement de phase, déterminé de symbole à symbole, dans les symboles pilotes continus (CPIL).

9. Méthode selon l'une des revendications 1 à 8, dans laquelle, si lors de la réception on détermine que le signal reçu n'est plus conforme au système, une dernière image acceptable est gelée et/ou le canal audio est automatiquement bloqué en flux descendant des étages de récepteur.

10. Méthode selon l'une des revendications 1 à 9, dans laquelle, après le positionnement de la fenêtre d'échantillonnage et/ou l'obtention d'une erreur de fréquence qui est inférieure à une seconde valeur seuil, la correction AFC approximative est vérifiée à des intervalles spécifiques et, si l'erreur de fréquence est supérieure à la seconde valeur seuil à plusieurs occasions, la correction AFC approximative est redémarrée.

11. Récepteur pour évaluer la conformité du système et la qualité de réception d'un signal numérique multiporteur reçu (INP) qui est organisé en trames temporelles-spectrales et contient des symboles de données possédant un intervalle de garde et une longueur de symbole souhaitée $T_u$ et des informations de référence (CPIL, SCPIL, TPSPIL), et qui peut être transmis dans divers types de modes (MO, 2k, 8k), ledit récepteur incluant :

- des dispositifs de synchronisation temporelle approximative (CTS) pour corréler ledit signal numérique multiporteur (INP) dans le domaine temporel avec ledit signal numérique multiporteur décalé dans le temps ;
- des dispositif multiplicateur (M), dont une première entrée est adaptée pour recevoir ledit signal numérique multiporteur (INP),
- des dispositifs de transformation de Fourier de temps-fréquence (FFT) qui sont aménagés en flux descendant de la sortie desdits dispositifs multiplexeurs et qui sont adaptés pour transformer une fenêtre d'échantillonnage extraite du signal de sortie desdits dispositifs multiplexeurs,
- des dispositifs d'AFC approximative (CAFC) qui sont adaptés pour recevoir des signaux de sortie desdits dispositifs de transformation de Fourier de temps-fréquence, et un oscillateur (NCO) qui est adapté pour être contrôlé par un signal de sortie de contrôle dudit dispositif d'AFC approximative et qui est adapté pour fournir à une seconde entrée desdits dispositifs multiplicateurs un signal de correction d'erreur (FCORR),

où pour un desdits symboles de données actuels supposés, lesdits dispositifs d'AFC approximative sont adaptés pour corréler sur une fréquence des valeurs complexes supposées, qui correspondent à un schéma d'aménagement prédéfini supposé des éléments d'information de référence (CPIL) dans ledit signal numérique multiporteur et qui sont des signaux de sortie dudit dispositif de transformation de Fourier de temps-fréquence, avec des valeurs spécifiées dans un schéma de position d'élément d'information de référence spécifié correspondant,
et où lesdits dispositifs d'AFC approximative sont adaptés pour déterminer, à partir d'une valeur maximum dérivée de résultats de corrélation connexes sur la fréquence, le décalage de fréquence du signal de bande de base correspondant et pour fournir un signal de contrôle correspondant audit oscillateur afin d'effectuer une correction de fréquence approximative,
et où lesdits dispositifs de transformation de Fourier de temps-fréquence, lesdits dispositif d'AFC approximative et ledit oscillateur sont adaptés pour fonctionner en fonction d'un des divers types de modes (MO) donnés ;

- de dispositifs (QREV) d'évaluation qualitative de la valeur de corrélation maximum et des valeurs de corrélation restantes associées avec ladite synchronisation temporelle approximative (CTS) et ladite correction AFC approximative afin de déterminer la conformité du système et/ou la présence dudit signal numérique multiporteur (INP),
- lesdits dispositifs de synchronisation temporelle approximative (CTS) sont adaptés au décalage dudit signal numérique multiporteur en temps par diverses valeurs de $T_u$ correspondant aux possibles types de modes ;
- un détecteur de mode (MDET) qui est aménagé en flux descendant desdits dispositifs de synchronisation temporelle approximative, lequel détecteur de mode est adapté pour déterminer le présent mode (MO) à partir de la position et des grandeurs de maxima des valeurs de corrélation temporelle, et pour déterminer l'intervalle de garde présent à partir d'intervalles entre des maxima des valeurs de corrélation temporelle, et pour déterminer une fenêtre d'échantillonnage ayant une longueur correspondant à $T_u$ pour lesdits dispositifs de transformation de Fourier de temps-fréquence (FFT) ;

**caractérisé par** :

-   lesdits dispositifs (QREV) d'évaluation qualitative sont adaptés pour déterminer si un premier ratio de la valeur de corrélation temporelle maximum sur la valeur moyenne des autres résultats partiels de la corrélation temporelle non associés à la valeur maximum est supérieur à une première valeur minimum préalablement spécifiée, et si un second ratio de la valeur maximum des corrélations effectuées sur une fréquence sur la valeur moyenne des autres résultats partiels de corrélation sur la fréquence non associés à la valeur maximum est supérieur à une seconde valeur minimum préalablement spécifiée, et si le premier ratio est supérieur à la première valeur minimum ou les deux ratios sont supérieurs à la première valeur minimum ou les deux ratios sont supérieurs aux première et seconde valeurs minimum, respectivement, le signal numérique multiporteur reçu est déterminé pour être conforme au système ou présent, sinon le signal numérique multiporteur reçu est déterminé pour être non conforme au système ou non présent ;
-   les dispositifs de synchronisation temporelle approximative (CTS) sont adaptés pour répéter les étapes de corrélation si aucun maximum de résultat de corrélation supérieur à une valeur seuil stockée n'est obtenu à partir de ladite synchronisation temporelle approximative (CTS).

12.  Récepteur pour évaluer la conformité du système et la qualité de réception d'un signal numérique multiporteur reçu (INP) qui est organisé en trames temporelles-spectrales et contient des symboles de données possédant un intervalle de garde et une longueur de symbole souhaitée $T_u$ et des informations de référence (CPIL, SCPIL, TPSPIL), et qui peut être transmis dans divers types de modes (MO, 2k, 8k), ledit récepteur incluant :

-   des dispositifs de synchronisation temporelle approximative (CTS) pour corréler ledit signal numérique multiporteur (INP) dans le domaine temporel avec ledit signal numérique multiporteur décalé dans le temps ;
-   des dispositifs multiplicateurs (M), dont une première entrée est adaptée pour recevoir ledit signal numérique multiporteur (INP),
-   des dispositifs de transformation de Fourier de temps-fréquence (FFT) qui sont aménagés en flux descendant de la sortie desdits dispositifs multiplexeur et qui sont adaptés pour transformer une fenêtre d'échantillonnage extraite du signal de sortie desdits dispositifs multiplexeurs,
-   des dispositifs d'AFC approximative (CAFC) qui sont adaptés pour recevoir des signaux de sortie desdits dispositifs de transformation de Fourier de temps-fréquence, et un oscillateur (NCO) qui est adapté pour être contrôlé par un signal de sortie de contrôle desdits dispositifs d'AFC approximative et qui est adapté pour fournir à une seconde entrée desdits dispositifs multiplicateurs un signal de correction d'erreur (FCORR),

où pour un desdits symboles de données actuels supposés, lesdits dispositifs d'AFC approximative sont adaptés pour corréler sur une fréquence des valeurs complexes supposées, qui correspondent à un schéma d'aménagement prédéfini supposé des éléments d'information de référence (CPIL) dans ledit signal numérique multiporteur et qui sont des signaux de sortie dudit dispositif de transformation de Fourier de temps-fréquence, avec des valeurs spécifiées dans un schéma de position d'élément d'information de référence spécifié correspondant,
et où lesdits dispositifs d'AFC approximative sont adaptés pour déterminer, à partir d'une valeur maximum dérivée de résultats de corrélation connexes sur la fréquence, le décalage de fréquence du signal de bande de base correspondant et pour fournir un signal de contrôle correspondant audit oscillateur afin d'effectuer une correction de fréquence approximative,
et où lesdits dispositifs de transformation de Fourier de temps-fréquence, lesdits dispositifs d'AFC approximative et ledit oscillateur sont adaptés pour fonctionner en fonction d'un des divers types de modes (MO) donnés ;

-   des dispositifs (QREV) d'évaluation qualitative de la valeur de corrélation maximum et des valeurs de corrélation restantes associées avec ladite synchronisation temporelle approximative (CTS) et ladite correction AFC approximative afin de déterminer la conformité du système et/ou la présence dudit signal numérique multiporteur (INP),
-   lesdits dispositifs de synchronisation temporelle approximative (CTS) sont adaptés au décalage dudit signal numérique multiporteur en temps par diverses valeurs de $T_u$ correspondant aux possibles types de modes ;
-   un détecteur de mode (MDET) qui est aménagé en flux descendant desdits dispositifs de synchronisation temporelle approximative, lequel détecteur de mode est adapté pour déterminer le présent mode (MO) à partir de la position et des grandeurs de maxima des valeurs de corrélation temporelle, et pour déterminer l'intervalle de garde présent à partir d'intervalles entre des maxima des valeurs de corrélation temporelle, et pour déterminer une fenêtre d'échantillonnage ayant une longueur correspondant à $T_u$ pour lesdits dispositifs de transformation de Fourier de temps-fréquence (FFT) ;

**caractérisé par** :

- lesdits dispositifs (QREV) d'évaluation qualitative sont adaptés pour déterminer si un premier ratio de la valeur de corrélation temporelle maximum sur la valeur moyenne des autres résultats partiels de la corrélation temporelle non associés à la valeur maximum est supérieur à une première valeur minimum préalablement spécifiée, et si un second ratio de la valeur maximum des corrélations effectuées sur une fréquence sur la valeur moyenne des autres résultats partiels de corrélation sur la fréquence non associés à la valeur maximum est supérieur à une seconde valeur minimum préalablement spécifiée, et si le premier ratio est supérieur à la première valeur minimum ou les deux ratios sont supérieurs à la première valeur minimum ou les deux ratios sont supérieurs aux première et seconde valeurs minimum, respectivement, le signal numérique multiporteur reçu est déterminé pour être conforme au système ou présent, sinon le signal numérique multiporteur reçu est déterminé pour être non conforme au système ou non présent ;

dans lequel lesdits dispositifs d'AFC approximative sont adaptés pour utiliser dans ladite corrélation uniquement les informations qui correspondent à des signaux pilotes continus, lesquels signaux pilotes sont avec des cellules pilotes diffusées (SCPIL) et de cellules pilotes de signalisation de paramètres de transmission (TPSPIL) désignées cellules pilotes comprises dans lesdites informations de référence (CPIL) ;

- un décodeur TPS (TPSDEC) et des dispositifs de synchronisation temporelle fine (FTS) qui sont adaptés pour effectuer une synchronisation temporelle fine en évaluant une séquence de synchronisation de cellules pilotes TPS (TPSPIL) extraites du signal de sortie des dispositifs de transformation de Fourier de temps-fréquence (FFT), afin de déterminer la position de trame et la position des cellules pilotes diffusées (SCPIL) qui sont également transférées du signal de sortie desdits dispositifs de transformation de Fourier de temps-fréquence vers lesdits dispositifs de synchronisation temporelle fine, dans la trame,

dans lequel lesdits dispositifs de synchronisation temporelle fine sont adaptés pour évaluer l'erreur entre une valeur nominale et le centre d'une réponse impulsionnelle obtenue à l'aide des cellules pilotes diffusées afin de régler une horloge d'échantillonnage correspondante (CL).

Fig.1